# EUROPÄISCHE PATENTSCHRIFT

(11) **EP 2 509 700 B1**
(45) Veröffentlichungstag und Bekanntmachung des Hinweises auf die Patenterteilung: **02.03.2016**
(21) Anmeldenummer: 10779695.5
(22) Anmeldetag: 05.11.2010
(51) Int. Cl.: B01D 53/10, B01D 53/64

(54) **VERFAHREN ZUR ABSCHEIDUNG VON QUECKSILBER AUS RAUCHGASEN VON HOCHTEMPERATURANLAGEN**
METHOD FOR REMOVING MERCURY FROM FLUE GASES OF HIGH-TEMPERATURE PLANTS
PROCÉDÉ DE SÉPARATION DU MERCURE CONTENU DANS DES GAZ DE COMBUSTION D'INSTALLATIONS À HAUTE TEMPÉRATURE

(30) Priorität: 09.12.2009 DE 102009057432
(43) Veröffentlichungstag der Anmeldung: 17.10.2012
(73) Patentinhaber: Rheinbraun Brennstoff GmbH, 50935 Köln (DE)
(72) Erfinder: HEUTER, Josef, 50935 Köln (DE); WIRLING, Jürgen, 50354 Hürth (DE)
(74) Vertreter: Kierdorf Ritschel Richly
(86) Internationale Anmeldenummer: PCT/EP2010/006752
(87) Internationale Veröffentlichungsnummer: WO 2011/069584

(56) Entgegenhaltungen:
- WO-A1-2005/092476
- WO-A1-2009/129298
- US-A1- 2008 292 512
- US-A1- 2009 010 828

## Beschreibung

Die Erfindung betrifft ein Verfahren zur Abscheidung von Quecksilber aus Rauchgasen von Hochtemperaturanlagen, insbesondere von Kraftwerken und Abfallverbrennungsanlagen, bei welchem dem Rauchgas in Strömungsrichtung hinter der Feuerung Brom und/oder bromhaltige Verbindungen zugegeben werden und anschließend das Rauchgas wenigstens einer trockenen Reinigung zur Abtrennung des Quecksilbers und etwa überschüssigen Broms und/oder überschüssiger Bromverbindungen unterzogen wird.

Quecksilber und Quecksilberverbindungen sind grundsätzlich in organischen bzw. fossilen Brennstoffen in mehr oder weniger großen Mengen vorhanden. Durch zunehmende Verbrennung fossiler Brennstoffe wird mehr und mehr Quecksilber mobilisiert und in der Biosphäre angereichert. Wegen der relativ hohen Toxizität von Quecksilber, insbesondere von organisch gebundenem Quecksilber, das direkt oder indirekt über die Nahrungskette auch vom Menschen aufgenommen wird, existieren relativ strenge Grenzwerte für die gesetzlich zulässigen Emissionen von Quecksilber z. B. aus Verbrennungsanlagen und Kraftwerken.

Obwohl beispielsweise bei in Deutschland betriebenen Kraftwerken und Abgasverbrennungsanlagen und ähnlichen Hochtemperaturanlagen bereits verhältnismäßig niedrige Quecksilber-Reingaskonzentrationen erzielt werden, hauptsächlich wegen der in Deutschland praktizierten Nasswäsche von Rauchgasen, gibt es insbesondere wegen der hohen Rauchgasvolumenströme, die beachtliche Quecksilberfrachten mit sich führen, weiterhin Bestrebungen, die Quecksilberemissionen zu reduzieren.

Quecksilber liegt in Verbrennungsanlagen und Kohlekraftwerken im Wesentlichen in zwei verschiedenen Formen vor, dem elementaren Quecksilber und dem oxidierten zweiwertigen Quecksilber. Im Gegensatz zu dem gasförmigen elementaren Quecksilber ist das gasförmige oxidierte Quecksilber wasserlöslich und kann daher in einer nachgeschalteten Rauchgasreinigungsanlage aus dem Rauchgas ausgewaschen werden. Auch ist die oxidierte Form des Quecksilbers in einer trockenen Rauchgasreinigung, beispielsweise mittels Flugstromadsorption, besser abscheidbar als elementares Quecksilber.

Die häufigste Form des oxidierten Quecksilbers ist das zweiwertige Quecksilberchlorid. Es entsteht bei der sogenannten Quecksilberchlorierung im abkühlenden Kesselrauchgas. Das Chlor im Kesselrauchgas stammt dabei aus dem Brennstoff (z. B. in der Kohle enthaltenen Chloriden). Im heißen Brennraum entsteht dabei zunächst HCl, das bei Abkühlung über die sogenannte "Deacon-Reaktion" in Cl₂ umgewandelt wird. Allerdings wird in Gegenwart von SO₂, das aus dem im Brennstoff enthaltenen Schwefel entsteht, dieses Chlor über die sogenannte "Griffin-Reaktion" wieder zum HCl umgewandelt und steht somit nicht für die Oxidation des Quecksilbers zur Verfügung. In Abhängigkeit des Chlor-Schwefel- und Quecksilbergehaltes im Brennstoff ergibt sich am Kesselende einer Verbrennungsanlage ein Verhältnis oxidiertes Quecksilber zu elementarem Quecksilber. Je höher der Anteil an oxidiertem Quecksilber ist, desto einfacher und besser lässt sich Quecksilber in der nachfolgenden Rauchgasreinigung abscheiden. Wünschenswert ist also eine möglichst vollständige Oxidation des Quecksilbers.

Um eine solche zu erzielen, ist es grundsätzlich bekannt, der Verbrennung und/oder dem Abgasstrom Halogene, insbesondere Jod oder Brom zuzugeben und damit die Konzentration elementaren Quecksilbers im Gasstrom gezielt zu verringern.

Als besonders geeignet zur Verringerung des elementaren Quecksilbers im Rauchgasstrom hat sich die sogenannte "bromgestützte Quecksilberabscheidung" erwiesen.

Ein bekanntes Verfahren wird beispielsweise in der DE 102 33 173 B4 beschrieben. Bei dem dort beschriebenen Verfahren wird Brom als Bromverbindung (beispielsweise Calciumbromid) in den Feuerraum oder zum Brennstoff (z. B. der Kohle) zugegeben. Ähnlich wie bei der zuvor beschriebenen Reaktion mit Chlor entsteht zunächst im heißen Brennraum (> 1000°C) HBr, das bei Abkühlung über die "Brom-Deacon-Reaktion" in Br₂ umgewandelt wird. Im Gegensatz zum Chlor reagiert dieses gebildete Br₂ allerdings erst bei Temperaturen < 100°C mit dem Schwefeldioxid, sodass das Brom im gesamten Kesselbereich für die Oxidation des Quecksilbers zur Verfügung steht.

Bei dem Verfahren gemäß DE 102 33 173 B4 ist deshalb vorgesehen, bei einer mehrstufigen Feuerung der Feuerung und/oder dem Rauchgas in einem der Feuerung nachgeschalteten Anlagenteil Brom und/oder eine bromhaltige Verbindung und/oder eine Mischung verschiedener bromhaltiger Verbindungen zuzuführen, wobei die Temperatur beim Kontakt der bromhaltigen Verbindung mit dem Rauchgas mindestens 500°C betragen soll und die Verbrennung in Gegenwart einer schwefelhaltigen Verbindung, insbesondere Schwefeldioxid, unter Zusatz von Schwefel und/oder einer schwefelhaltigen Verbindung und/oder einer Mischung verschiedener schwefelhaltiger Verbindungen erfolgt, wobei anschließend das Rauchgas einer mehrstufigen Reinigung zur Abtrennung von Quecksilber aus dem Rauchgas unterzogen wird. Wie vorstehend beschrieben, ist dies einfach mittels einer Nasswäsche möglich.

Dem liegt u. a. auch die Erkenntnis zugrunde, dass bei vergleichbarem SO₂-Gehalt die Oxidation mit Brom mindestens 25fach effizienter ist als die Oxidation mit Chlor. Das entstandene oxidierte Quecksilber kann einfach in Nasswäsche abgeschieden und in einer Waschwasserbehandlung ausgefällt werden.

Ein Nachteil dieses bekannten Verfahrens ist u. a. darin zu sehen, dass insbesondere die Zugabe der Bromverbindungen in den Feuerraum nur eine eingeschränkte Flexibilität bezogen auf die jeweils vorliegenden Rauchgasbedingungen bzw. auf sich ändernde Rauchgasbedingungen bietet. Darüber hinaus ist das Verfahren auf spätere Anwendungen mit Nasswäschern begrenzt, da ohne die Temperaturabsenkung im Wäscher das im Prozess über die Brom-Deacon-Reaktion entstandene toxisch relevante Brom nicht oder nur z. T. im Abgasweg abgetrennt wird und damit gasförmig in die Atmosphäre gelangt. Dabei ist zu bedenken, dass Brom ebenso wie Quecksilber ein hochtoxisches Umweltgift ist. Viele ältere Kohlekraftwerke, insbesondere im Ausland, verfügen nicht über Nasswäscher, sodass die Beschränkung des bekannten Verfahrens auf Hochtemperaturanlagen ohne nachgeschaltete Rauchgasnasswäsche ein Ausschlusskriterium ist.

Ein Verfahren gemäß Oberbegriff von Anspruch 1 ist beispielsweise aus der US 2009/0010828 A1 bekannt. Bei dem aus dem Dokument US 2009/0010828 bekannten Verfahren werden dem Rauchgas in Strömungsrichtung hinter der Feuerung bromhaltige Verbindungen beispielsweise in Form von Brommethan, Bromethan oder Brompropan zugegeben. Die Bromverbindungen werden dem Rauchgas bei einer Rauchgastemperatur zwischen 60°C und 400°C zugeführt, anschließend wird das Rauchgas einer Reinigung zur Abtrennung des Quecksilbers und etwa überschüssigem Broms unterzogen. Unter Annahme, dass die Thermodynamik für die Oxidation von Quecksilber insbesondere bei geringeren Temperaturen günstig ist, wird in dem Dokument die Verwendung von Reaktanten wie Brommethan und Bromethan vorgeschlagen, die insbesondere bei niedrigen Temperaturen dissoziieren. Eine Dissoziation erfolgt außerhalb des Rauchgasstroms. Die Reaktanten werden dem Rauchgasstrom in bereits dissoziierter Form aufgegeben. Das erfordert zwingend das Einbringen der Reaktanten in der Gasphase und ist verhältnismäßig aufwendig.

Ein anderes Verfahren zur bromgestützten Quecksilberabscheidung aus Rauchgas einer Hochtemperaturanlage ist beispielsweise aus der WO 2005/092476 A1 bekannt. Als Reaktant wird in diesem Verfahren Bromwasserstoff vorgeschlagen, das bei Temperaturen von bis zu 50°C mit den Sorbentien in Kontakt gebracht wird. Die bereits dotierten Sorbentien werden bei Temperaturen <175°C in den Abgasstrom eingeblasen.

Das Verfahren ist insoweit aufwendiger, als dass eine vorherige Dotierung der Adsorbentien mit Bromwasserstoff erforderlich ist. Alternativ zu Bromwasserstoff wird in dem Dokument Br₂ als Bromverbindung genannt. Sowohl Bromwasserstoff als Br₂ sind äußerst toxisch und stark ätzend, womit beim Umgang entsprechende Sicherungsmaßnahmen zwingend erforderlich sind. Aufgrund der chemischen Eigenschaften dieser Substanzen sind diese nur in kleineren Einheiten einigermaßen zu handhaben.

Aus der WO 2009/129298 A1 ist ein Verfahren zur Abscheidung von Quecksilber aus Rauchgasen von Hochtemperaturanlagen bekannt, bei welchem mit Halogenen dotierte Aktivkohlen als Absorbentien in Form einer Flugstaubwolke dem Rauchgas der Hochtemperaturanlage aufgegeben werden, wobei das Rauchgas stromabwärts der Zugabe der Adsorbentien einer trockenen Reinigung mittels Elektrofilter unterzogen wird. Bei einer Variante dieses Verfahrens ist vorgesehen, zusätzlich zu den Adsorbentien bromhaltige Salze dem Rauchgasstrom aufzugeben.

Der Erfindung liegt daher die Aufgabe zugrunde, ein Verfahren bereitzustellen, welches verhältnismäßig einfach und kostengünstig durchführbar ist und welches hinsichtlich seiner Einstellbarkeit auf wechselnde Abgaszusammensetzungen und hinsichtlich seines Anwendungsbereichs verbessert ist.

Die Aufgabe wird gelöst durch die Merkmale des Anspruchs 1. Erfindungsgemäß ist eine vorteilhafte Kombination von bromgestützter und adsorptiver Quecksilberabscheidung vorgesehen. Dabei hat sich herausgestellt, dass, anders als dies in der Fachpresse und im Stand der Technik gemäß DE 102 33 173 B4 beschrieben ist, bereits eine nennenswerte Quecksilberbromierung bei Temperaturen deutlich unterhalb von 500°C möglich ist.

Der Wirkmechanismus lässt sich aus der Dissoziation des NaBr bzw. des CaBr₂ zu Bromidanionen erklären, die im Porengerüst der Aktivkohle und in Anwesenheit von Wasserdampf bei Temperaturen unter 500°C erfolgt. Von wesentlichem Einfluss ist hierbei die Kapillarstruktur der Aktivkohle bzw. des Herdofenkokses durch die in Verbindung mit dem in der Atmosphäre enthaltenen Wasserdampf die Dissoziation mit der daran anschließenden Oxidation zu Quecksilberbromid abläuft. Das hierbei gebildete Quecksilberbromid ist im Gegensatz zu dem in der DE 102 33 173 B4 beschriebenen Verfahren fest in der Aktivkohlematrix gebunden und kann über das nachgeschaltete Entstaubungsaggregat sicher abgeschieden werden.

Erfindungsgemäßist vorgesehen, dass Brom und/oder die Bromverbindung bezogen auf die Rauchgasströmung stromaufwärts von in Form einer Flugstaubwolke in den Rauchgasstrom eingebrachten kohlenstoffhaltigen Adsorbentien, vorzugsweise in Form von Aktivkohlen und/oder Aktivkoksen in Kontakt gebracht werden.

Das erfindungsgemäße Verfahren hat gegenüber den bekannten Verfahren insbesondere den Vorzug, dass der Schwefeldioxidanteil im Abgas für das Verfahren nicht kritisch ist.

In jedem Falle werden Konkurrenzreaktionen des Broms mit anderen im Abgas enthaltenen Substanzen dadurch vermieden, dass die Bromverbindungen in unmittelbarer räumlicher Nähe zu den Adsorbentien dem Gasstrom aufgegeben werden. Durch eine besonders günstige Kombination von reaktiver und adsorptiver Abgasreinigung ist das Verfahren gemäß der Erfindung nicht auf eine nachgeschaltete Nasswäsche angewiesen.

Bei einer bevorzugten Variante des Verfahrens gemäß der Erfindung ist vorgesehen, dass der räumliche Abstand zwischen der Zugabe von Brom und/oder bromhaltigen Verbindungen und der Zugabe von Adsorbentien gemessen als Temperaturdifferenz des Rauchgasstromes < 410°C beträgt. Mit anderen Worten, der räumliche Abstand zwischen der Zugabe von Brom und/oder bromhaltigen Verbindungen in den Abgasstrom hinter einer Feuerung ist so gewählt, dass der Rauchgasstrom zwischen Zugabe von Brom und Zugabe von Adsorbentien sich nicht mehr als 410°C abkühlt. Dabei ist nach der Erfindung nicht ausgeschlossen, dass die Abkühlung des Rauchgasstroms etwa zwischen der Zugabe der bromhaltigen Verbindungen und der Zugabe von Adsorbentien unter Anwendung eines oder mehrerer Wärmetauscher erfolgt.
Das Brom und/oder die Bromverbindungen werden in flüssiger oder gasförmiger Form in den Rauchgasstrom eingebracht.

Bei einer zweckmäßigen Variante des Verfahrens gemäß der Erfindung kann der Anteil an Brom und/oder bromhaltigen Verbindungen an der insgesamt zudosierten Menge an Adsorbentien und Brom und/oder Bromverbindungen zwischen 3 und 14 Masseprozent, vorzugsweise zwischen 5 und 12 Masseprozent betragen.

Als Adsorbentien können beispielsweise alle Arten von Aktivkohlen und Aktivkoksen sowohl einzeln als auch als in Mischung Anwendung finden. Bei einer besonders bevorzugten Variante des Verfahrens finden als kohlenstoffhaltige Adsorbentien Braunkohlenkokse, vorzugsweise sogenannte Herdofenkokse Anwendung.

Bei separater Zugabe des Broms und/oder der Bromverbindung erfolgt die Einbringung von Natriumbromid oder Calciumbromid, vorzugsweise flüssig durch eine Eindüsung in den Rauchgasstrom, hinter einer Feuerung und vor einer Rauchgasentstaubung und einer etwa nachgeschalteten Rauchgasentschwefelung. Bei Einbringung einer flüssigen Bromverbindung kommt beispielsweise Calciumbromid (CaBr₂) als Bromverbindung in Betracht, bei gasförmiger Zugabe kann beispielsweise Bromwasserstoff (HBr) Anwendung finden.

Stromabwärts der Zugabe der Bromverbindungen werden dann kohlenstoffhaltige Adsorbentien in Form einer Flugstaubwolke in den Rauchgasstrom eingebracht, wobei der Abstand der Zugabe der Bromverbindungen einerseits und der kohlenstoffhaltigen Adsorbentien die im Rauchgasstrom zur Verfügung stehende

Reaktionsstrecke definieren, über welche eine Bromierung des elementaren Quecksilbers im Rauchgasstrom erfolgt. Vorzugsweise erfolgt die Zugabe der Bromverbindungen bei Temperaturen < 500°C und > 250°C. Die Zugabe der kohlenstoffhaltigen Adsorbentien in Form einer Flugstaubwolke erfolgt bei Temperatur ≤ 250°C. Die Abscheidung des Quecksilberbromids und des überschüssigen Broms erfolgt über die kohlenstoffhaltigen Adsorbentien, die in einem nachgeschalteten Entstaubungsaggregat aus dem Rauchgasstrom ausgehalten werden. Als Entstaubungsaggregate kommen die üblichen Elektrofilter, Tuchfilter etc. in Betracht.

Bei der zuvor beschriebenen Variante der getrennten Zugabe von Brom einerseits und Adsorbentien andererseits steht das in den Abgasstrom eingedüste Brom bereits in der Gasphase für die Oxidation des Quecksilbers zur Verfügung. In einem weiteren zusätzlichen Schritt erfolgt die Quecksilberabtrennung bzw. Abscheidung an der im Gaspfad dotierten Aktivkohle.

Bei dem Verfahren gemäß der Erfindung erfolgt bei getrennter Zugabe von Brom und Adsorbentien bzw. Herdofenkoks eine *in situ* Dotierung der kohlenstoffhaltigen Adsorbentien.

Bei dem Verfahren gemäß der Erfindung erfolgt die separate Zugabe von Calciumbromid oder Natriumbromid in der flüssigen Phase oder von Bromwasserstoff in der Gasphase, wobei die kohlenstoffhaltigen Adsorbentien in der Flugstaubwolke Kristallisationskeime für die in den Rauchgasstrom eingebrachten Bromverbindungen bilden.

Je nach Gaszusammensetzung des Rauchgases kann eine Dosierung der Adsorbentien im Bereich von 20 mg bis 300 mg bezogen auf einen m³ Rauchgas, vorzugsweise zwischen 50 mg und 150 mg Rauchgas erfolgen. Die Zugabe von Natriumbromid bzw. Calciumbromid bezogen auf den Bromanteil im Gemisch mit den Adsorbentien liegt bei zwischen 3 und 14 Masseprozent, vorzugsweise zwischen 5 und 10 Masseprozent, abhängig von der Quecksilberkonzentration im Abgas.

## Patentansprüche

1. Verfahren zur Abscheidung von Quecksilber aus Rauchgasen von Hochtemperaturanlagen, insbesondere von Kraftwerken und Abfallverbrennungsanlagen, bei welchem dem Rauchgas in Strömungsrichtung hinter der Feuerung bromhaltige Verbindungen stromaufwärts von in Form einer Flugstaubwolke in den Rauchgasstrom eingebrachten kohlenstoffhaltigen Adsorbentien zugegeben werden und anschließend das Rauchgas wenigstens einer trockenen Reinigung zur Abtrennung des Quecksilbers und etwa überschüssiger Bromverbindungen unterzogen wird, wobei die Bromverbindungen mit dem Rauchgas bei einer Rauchgastemperatur zwischen 80°C und 490°C in Kontakt gebracht werden, **dadurch gekennzeichnet, dass** als Bromverbindungen Natriumbromid und/oder Calciumbromid Anwendung finden wobei die Zugabe der Bromverbindungen bei Temperaturen 250°C und die Zugabe der kohlenstoffhaltigen Absorbentien in Form einer Flugstaubwolke bei Temperaturen ≤ 250°C erfolgt.

2. Verfahren nach Anspruch 1, **dadurch gekennzeichnet, dass** als kohlenstoffhaltige Adsorbentien Aktivkohlen und/oder Aktivkokse Anwendung finden.

3. Verfahren nach Anspruch 2 oder 1, **dadurch gekennzeichnet, dass** der räumliche Abstand zwischen der Zugabe von bromhaitigen Verbindungen und der Zugabe von Adsorbentien gemessen als Temperaturdifferenz des Rauchgasstroms ≤ 410°C beträgt.

4. Verfahren nach einem der Ansprüche 1 bis 3, **dadurch gekennzeichnet, dass** die Bromverbindungen in flüssiger oder gasförmiger Form in den Rauchgasstrom eingebracht werden.

5. Verfahren nach einem der Ansprüche 1 bis4, **dadurch gekennzeichnet, dass** der Anteil an bromhaltigen Verbindungen an der insgesamt zudosierten Menge an Adsorbentien und Bromverbindungen zwischen 3 und 14 Masseprozent, vorzugsweise zwischen 5 und 12 Masseprozent beträgt.

## Claims

1. Method for removing mercury from flue gases of high-temperature plants, in particular of power plants and waste incineration plants, in which bromine-containing compounds are added, upstream of carbon-containing adsorbents introduced in the form of a cloud of flue dust into the flue gas stream, to the flue gas in the direction of flow after the combustion chamber and then the flue gas is submitted to at least one dry scrubbing process to remove mercury and any excess bromine compounds, wherein the bromine compounds are brought into contact with the flue gas at a flue gas temperature between 80°C and 490°C, **characterized in that** sodium bromide and/or calcium bromide are used as bromine compounds, wherein the bromine compounds are added at temperatures of > 250°C and the carbon-containing absorbents are added in the form of a cloud of flue dust at temperatures of ≤ 250°C.

2. Method according to Claim 1, **characterized in that** activated carbon and/or activated coke are used as adsorbents.

3. Method according to Claim 2 or 1, **characterized in that** the spatial distance between the addition of bromine-containing compounds and the addition of adsorbents, measured as the temperature difference of the flue gas stream, is ≤ 410°C.

4. Method according to one of Claims 1 to 3, **characterized in that** the bromine compounds are introduced in liquid or gaseous form into the flue gas stream.

5. Method according to one of Claims 1 to 4, **characterized in that** the proportion of bromine-containing compounds in the total amount of adsorbents and bromine compounds added is between 3 and 14 wt.%, preferably between 5 and 12 wt.%.

## Revendications

1. Procédé destiné à éliminer le mercure contenu dans les fumées d'installations à haute température, notamment de centrales électriques et d'installations d'incinération de déchets, dans lequel des composés contenant du brome en amont d'adsorbants contenant du carbone introduits dans le courant de fumées sous la forme d'un nuage de poussières volantes sont ajoutés aux fumées après le chauffage dans la direction de l'écoulement, puis les fumées sont soumises à au moins une purification à sec pour séparer le mercure et les composés de brome éventuels en excès, les composés de brome étant mis en contact avec les fumées à une température des fumées comprise entre 80 °C et 490 °C, **caractérisé en ce que** du bromure de sodium et/ou du bromure de calcium sont utilisés en tant que composés de brome, composés de brome étant ajoutés à des températures de > 250 °C et les absorbants contenant du carbone sous las forme d'un nuage de poussières volantes étant ajoutés à des températures de ≤ 250 °C.

2. Procédé selon la revendication 1, **caractérisé en ce que** du charbon actif et/ou du coke actif sont utilisés en tant qu'adsorbants contentant du carbone.

3. Procédé selon la revendication 2 ou 1, **caractérisé en ce que** l'écart spatial entre l'ajout des composés contenant du brome et l'ajout des adsorbants, mesuré sous la forme d'une différence de température du courant de fumées, est ≤ 410 °C.

4. Procédé selon l'une quelconque des revendications 1 à 3, **caractérisé en ce que** les réactifs sont introduits dans le courant de fumées sous forme liquide ou gazeuse.

5. Procédé selon l'une quelconque des revendications 1 à 4, **caractérisé en ce que** la proportion de composés contenant du brome par rapport à la quantité totale introduite d'adsorbants et de composés de brome est comprise entre 3 et 14 pour cent en masse, de préférence entre 5 et 12 pour cent en masse.
